(19) Europäisches Patentamt / European Patent Office / Office européen des brevets

(11) **EP 4 502 652 A2**

(12) **EUROPEAN PATENT APPLICATION**

(43) Date of publication:
**05.02.2025 Bulletin 2025/06**

(21) Application number: **24187194.6**

(22) Date of filing: **08.07.2024**

(51) International Patent Classification (IPC):
**G01S 7/484** (2006.01)   **G01S 7/487** (2006.01)
**G01S 17/18** (2020.01)   **G01S 7/292** (2006.01)
**G01S 13/931** (2020.01)

(52) Cooperative Patent Classification (CPC):
**G01S 7/484; G01S 7/4873; G01S 7/4876;
G01S 17/18;** G01S 7/2922; G01S 13/931;
G01S 17/931

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023   CN 202310973829**

(71) Applicant: **Suteng Innovation Technology Co.,
Ltd.
Shenzhen City Guangdong 518000 (CN)**

(72) Inventors:
• **Gong, Changsheng
  Shenzhen, 518000 (CN)**
• **Zhang, Feng
  Shenzhen, 518000 (CN)**

(74) Representative: **RGTH
Patentanwälte PartGmbB
Neuer Wall 10
20354 Hamburg (DE)**

(54) **RADAR RANGING METHOD, DEVICE, ELECTRONIC DEVICE, AND COMPUTER-READABLE STORAGE MEDIUM**

(57)     A radar ranging method, device, electronic device, and computer-readable storage medium are provided. The radar ranging method includes: obtaining a plurality of measurement data sets by sampling at least one echo signal based on a plurality of thresholds in a measurement period, wherein the echo signal is sampled based on one threshold to obtain one measurement data set, and each measurement data set includes at least one measurement data; determining M backup data and N auxiliary data in the plurality of measurement data sets, and obtaining a total composite degree of each backup data; determining target data from the M backup data, based on the total composite degree; and determining a measurement distance based on the target data, which enhance the dynamic range of the LiDAR system, improve the measurement accuracy of the LiDAR and reducing the short-distance detection blind zone of the LiDAR.

Fig.1

## Description

TECHNICAL FIELD

The present application relates to the field of radar technology, and more specifically, to a radar ranging method, device, electronic device, and computer-readable storage medium in the field of radar technology.

BACKGROUND

In the fields of smart transportation and autonomous driving, perceive the road environment and the surrounding environment of autonomous vehicles is important. This perception is based on the road information, vehicle position information, and obstacle information obtained by sensor devices such as LiDAR. The autonomous vehicles use this information to control themselves, adjust the safe distance between vehicles, and ensure safe and reliable driving on the road.

The system dynamic range of LiDAR is an indicator for the measurement accuracy of LiDAR. Prevent saturation at short distances while ensuring sufficient detection of echo signals at long distances. When short-distance echoes saturate, it not only degrades ranging accuracy but also renders the LiDAR unable to detect effective target echoes at short distances, enlarging the short-distance blind zone of the LiDAR. Therefore, improving the measurement accuracy of LiDAR and reducing the short-distance detection blind zone of Li-DAR has become an urgent issue to address.

SUMMARY

Embodiments of the present application provide a radar ranging method, device, electronic device, and computer-readable storage medium. This method can enhance the dynamic range of a LiDAR system, thereby improving the measurement accuracy of the LiDAR and reducing the close-range detection blind spot of the LiDAR.

In a first aspect, a radar ranging method is provided, comprising: obtaining a plurality of measurement data sets, by sampling at least one echo signal based on a plurality of thresholds in a measurement period, wherein the echo signal is sampled based on one threshold to obtain one measurement data set, and each measurement data set includes at least one measurement data; determining M backup data and N auxiliary data in the plurality of measurement data sets, and obtaining a total composite degree of each backup data, wherein M and N are positive integers, and a sum of M and N is equal to a total quantity of measurement data included in the plurality of measurement data sets; determining target data from the M backup data, based on the total composite degree; and determining a measurement distance based on the target data.

In an embodiment, the radar ranging method comprises: dividing a ranging range of the radar into X sub-distance ranges according to a preset rule, wherein X is a positive integer greater than 1; and wherein determining M backup data and N auxiliary data in the plurality of measurement data sets comprises: determining the M backup data and the N auxiliary data in the plurality of measurement data sets, based on measurement data sampled according to a preset threshold corresponding to the sub-distance range.

In an embodiment, when emitting an outgoing signal in the measurement period, determining the M backup data and the N auxiliary data in the plurality of measurement data sets, based on the measurement data sampled according to the preset threshold corresponding to each of the sub-distance ranges, comprises: using the measurement data sampled based on the preset threshold corresponding to each of the sub-distance ranges as the backup data, to obtain the M backup data; and using the measurement data other than the M backup data in the plurality of measurement data sets as the auxiliary data, to obtain the N auxiliary data.

In an embodiment, when emitting a plurality of outgoing signals in the measurement period, and powers of the plurality of outgoing signals are different, determining the M backup data and the N auxiliary data in the plurality of measurement data sets, based on the measurement data sampled according to the preset threshold corresponding to each of the sub-distance ranges, comprises: using the measurement data corresponding to the outgoing signal with the preset power in the plurality of measurement data sets as the backup data, to obtain the M backup data; and using the measurement data other than the M backup data in the plurality of measurement data sets as the auxiliary data, to obtain the N auxiliary data.

In an embodiment, obtaining the total composite degree of each backup data comprises: determining a sub-distance range where each measurement datum in the plurality of measurement data sets is located, to obtain sub-distance ranges corresponding to the backup data and the auxiliary data; determining a main composite degree, an auxiliary composite degree, and a cross composite degree of the backup data Si based on the backup data, the auxiliary data, and the sub-distance range corresponding to the backup data, wherein the backup data Si is any one of the M backup data, $1 \leq i \leq M$, and i is an integer; and performing weighted calculation on the main composite degree, the auxiliary composite degree, and the cross composite degree of the backup data Si, to obtain the total composite degree of the backup data Si.

In an embodiment, determining the main composite degree of the backup data Si comprises: obtaining at least one backup data that meets a preset requirement in the plurality of measurement periods, as a comparison data set, wherein the preset requirement is that the outgoing signal corresponding to the backup data in the comparison data set and the outgoing signal corresponding to the backup data Si in the current measurement period have the same emission power, and a threshold corresponding to the backup data in the comparison data set and a threshold corresponding to the backup data Si in the current measurement period are the same; comparing the backup data Si in the current measurement period with each backup data in the comparison data set in turn; and obtaining the main composite degree of the backup data Si based on a comparison result.

In an embodiment, obtaining the main composite degree of the backup data Si based on the comparison result comprises: when a difference between the backup data in the comparison data set and the backup data Si in the current measurement period is less than a first preset value, adding 1 to the main composite degree of the backup data Si; iterating through each backup data in the comparison data set to obtain the main composite degree of the backup data Si; or when the main composite degree of the backup data Si is greater than or equal to a main composite degree threshold, setting the main composite degree of the backup data Si to the main composite degree threshold.

In an embodiment, determining the auxiliary composite degree of the backup data Si comprises: comparing the backup data Si with the N auxiliary data in turn; and obtaining the auxiliary composite degree of the backup data Si based on a comparison result.

In an embodiment, obtaining the auxiliary composite degree of the backup data Si based on the comparison result comprises: when a difference between one of the N auxiliary data and the backup data Si is less than a second preset value, adding 1 to the auxiliary composite degree of the backup data; iterating through each of the N auxiliary data to obtain the auxiliary composite degree of the backup data Si; or when the auxiliary composite degree of the backup data Si is greater than or equal to an auxiliary composite degree threshold, setting the auxiliary composite degree of the backup data Si to the auxiliary composite degree threshold.

In an embodiment, determining the cross composite degree of the backup data Si comprises: determining that the backup data Si is located in the middle sub-distance range; obtaining at least one target sub-distance range other than the middle sub-distance range as a target sub-distance range in the K sub-distance ranges, wherein K≤X, and K is a positive integer; and comparing the backup data Si with the backup data in the at least one target sub-distance range in turn; and determining the cross composite degree of the backup data Si based on a comparison result.

In an embodiment, determining the cross composite degree of the backup data Si based on the comparison result comprises: when a difference between the backup data in the at least one target sub-distance range and the backup data Si is less than a third preset value, adding 1 to the cross composite degree of the backup data Si; iterating through the backup data in the at least one target sub-distance range to obtain the cross composite degree of the backup data Si; or when the cross composite degree of the backup data Si is greater than or equal to a cross composite degree threshold, setting the cross composite degree of the backup data Si to the cross composite degree threshold.

In an embodiment, determining the target data from the M backup data based on the total composite degree comprises: determining the backup data with the highest total composite degree from the M backup data as the target data.

In an embodiment, determining the target data from the backup data with the highest total composite degree from the M backup data comprises: when a quantity of the backup data with the highest total composite degree from the M backup data is one, determining the backup data with the highest total composite degree as the target data; or when a quantity of the backup data with the highest total composite degree from the M backup data is greater than one, determining the backup data with the highest total composite degree and the largest distance value as the target data.

In an embodiment, determining the measurement distance based on the target data comprises: obtaining an endpoint value of the sub-distance range, and constructing a smoothing range with the endpoint value as a center; determining whether the target data is located in the smoothing range; and determining the measurement distance based on a determination result.

In an embodiment, determining the measurement distance based on the determination result comprises: when the target data is not in the smoothing range, determining that the measurement distance is equal to the target data; or when the target data is in the smoothing range, determining that the sub-distance range where the target data is located is a first sub-distance range, determining a second sub-distance range adjacent to the first sub-distance range in the smoothing range as a second sub-distance range; obtaining a first threshold corresponding to the first sub-distance range, and a second threshold corresponding to the second sub-distance range; determining measurement data in the smoothing range based on the first threshold as a first distance, and determining measurement data in the smoothing range based on the second threshold as a second distance; and performing weighted calculation on the first distance and the second distance to obtain the measurement distance.

In a second aspect, a radar ranging device is provided, comprising: a data obtaining module, configured to obtain a plurality of measurement data sets by sampling at least one echo signal based on a plurality of thresholds in a measurement period, wherein the echo signal is sampled based on one threshold to obtain one measurement data set, and each measurement data set includes at least one measurement data; a composite degree calculation module, configured to determine M backup data and N auxiliary data in the plurality of measurement data sets, and obtain a total composite degree of each backup data, wherein M and N are positive integers, and a sum of M and N is equal to a total quantity of measurement data included in the plurality of measurement data sets; a data selecting module, configured to determine target data from the M backup data based on the total composite degree; and a distance calculation module, configured to determine a measurement distance based on the target data.

In an embodiment, the radar ranging device further comprises: a partitioning unit, configured to divide a ranging range of the radar into X sub-distance ranges according to a preset rule, wherein X is a positive integer greater than 1; and the composite degree calculation module, configured to determine the M backup data and N auxiliary data in the plurality of measurement data sets, based on measurement data sampled according to a preset threshold corresponding to the sub-distance range.

In an embodiment, an outgoing signal is emitted in the measurement period, the composite degree calculation module comprises: a first obtaining unit, configured to use the measurement data sampled based on the preset threshold corresponding to each of the sub-distance ranges as the backup data, to obtain the M backup data; and a first filtering unit, configured to use the measurement data other than the M backup data in the plurality of measurement data sets as the auxiliary data, to obtain the N auxiliary data.

In an embodiment, a plurality of outgoing signals are emitted in the measurement period, and powers of the plurality of outgoing signals are different, the composite degree calculation module comprises: a second obtaining unit, configured to use the measurement data corresponding to the outgoing signal with the preset power in the plurality of measurement data sets as the backup data, to obtain the M backup data; and a second filtering unit, configured to use the measurement data other than the M backup data in the plurality of measurement data sets as the auxiliary data, to obtain the N auxiliary data.

In an embodiment, the composite degree calculation module comprises: a partition determination unit, configured to determine a sub-distance range where each measurement datum in the plurality of measurement data sets is located, to obtain sub-distance ranges corresponding to the backup data and the auxiliary data; a first calculation unit, configured to determine a main composite degree, an auxiliary composite degree, and a cross composite degree of the backup data $S_i$ based on the backup data, the auxiliary data, and the sub-distance range corresponding to the backup data, wherein the backup data $S_i$ is any one of the M backup data, $1 \le i \le M$, and i is an integer; and a second calculation unit, configured to perform weighted calculation on the main composite degree, the auxiliary composite degree, and the cross composite degree of the backup data $S_i$, to obtain the total composite degree of the backup data $S_i$.

In an embodiment, the first calculation unit comprises: a data set determination sub-unit, configured to obtain at least one backup data that meets a preset requirement in the plurality of measurement periods, as a comparison data set, wherein the preset requirement is that the outgoing signal corresponding to the backup data in the comparison data set and the outgoing signal corresponding to the backup data $S_i$ in the current measurement period have the same emission power, and a threshold corresponding to the backup data in the comparison data set and a threshold corresponding to the backup data $S_i$ in the current measurement period are the same; a first comparison sub-unit, configured to compare the backup data $S_i$ in the current measurement period with each backup data in the comparison data set in turn; and a first determination sub-unit, configured to obtain the main composite degree of the backup data $S_i$ based on a comparison result.

In an embodiment, the first determination sub-unit is configured to: when a difference between the backup data in the comparison data set and the backup data $S_i$ in the current measurement period is less than a first preset value, adding one to the main composite degree of the backup data $S_i$; iterating through each backup data in the comparison data set to obtain the main composite degree of the backup data $S_i$; or when the main composite degree of the backup data $S_i$ is greater than or equal to a main composite degree threshold, setting the main composite degree of the backup data $S_i$ to the main composite degree threshold.

In an embodiment, the first calculation unit comprises: a second comparison sub-unit, configured to compare the backup data $S_i$ with the N auxiliary data in turn; and a second determination sub-unit, configured to obtain the auxiliary composite degree of the backup data $S_i$ based on a comparison result.

In an embodiment, the second determination sub-unit is configured to: when a difference between one of the N auxiliary data and the backup data $S_i$ is less than a second preset value, adding one to the auxiliary composite degree of the backup data; iterating through each of the N auxiliary data to obtain the auxiliary composite degree of the backup data $S_i$; or when the auxiliary composite degree of the backup data $S_i$ is greaterthan or equal to an auxiliary composite degree threshold, setting the auxiliary composite degree of the backup data $S_i$ to the auxiliary composite degree threshold.

In an embodiment, the first calculation unit comprises: a target range determination sub-unit, configured to determine that the sub-distance interval where the candidate data $S_i$ is located is an intermediate sub-distance interval, and obtaining at least one of the K sub-distance intervals except the intermediate sub-distance interval as a target sub-distance interval; wherein $K \le X$, and K is a positive integer;; a third comparison sub-unit, configured to compare the backup data $S_i$ with the backup data in the at least one target sub-distance range in turn; and a third determination sub-unit, configured to determine the cross composite degree of the backup data Si based on a comparison result.

In an embodiment, the third determination sub-unit is configured to: when a difference between the backup data in the at least one target sub-distance range and the backup data Si is less than a third preset value, adding one to the cross composite degree of the backup data Si; iterating through the backup data in the at least one target sub-distance range to obtain the cross composite degree of the backup data Si; or when the cross composite degree of the backup data Si is greater than or equal to a cross composite degree threshold, setting the cross composite degree of the backup data Si to the cross composite degree threshold.

In an embodiment, the data selecting module is configured to: determine the target data from the backup data with the highest total composite degree from the M backup data.

In an embodiment, the data selecting module comprises: a first selection unit, configured to determine the backup data with the highest total composite degree as the target data when the backup data with the highest total composite degree from the M backup data is one; and a second selection unit, configured to determine the backup data with the highest total composite degree and the largest distance value as the target data when a quantity of the backup data with the highest total composite degree from the M backup data is greater than one.

In an embodiment, the distance calculation module comprises: a range construction unit, configured to obtain an endpoint value of the sub-distance range, and constructing a smoothing range with the endpoint value as a center; a data determination unit, configured to determine whether the target data is located in the smoothing range; and a distance determination unit, configured to determine the measurement distance based on a determination result.

In an embodiment, the distance determination unit comprises: a first distance determination sub-unit, configured to determine that the measurement distance is equal to the target data when the target data is not in the smoothing range; and a second distance determination sub-unit, configured to determine that the sub-distance range where the target data is located is a first sub-distance range, and to determine a second sub-distance range adjacent to the first sub-distance range in the smoothing range as a second sub-distance range when the target data is in the smoothing range; obtaining a first threshold corresponding to the first sub-distance range, and a second threshold corresponding to the second sub-distance range; determining measurement data in the smoothing range based on the first threshold as a first distance, and determining measurement data in the smoothing range based on the second threshold as a second distance; and performing weighted calculation on the first distance and the second distance to obtain the measurement distance.

In a third aspect, an electronic device is provided, comprises: a memory configured to store executable program code; and a processor configured to read and run the executable program code from the memory, so that the electronic device performs the radar ranging method embodiments.

In the fourth aspect, a computer program product is provided, comprising: computer program code, when the computer program code is executed on a computer, causing the computer to perform the radar ranging method embodiments.

In the fifth aspect, a computer-readable storage medium is provided, wherein the computer-readable storage medium stores computer program code, and when the computer program code is executed on a computer, causing the computer to perform the radar ranging method embodiments.

Embodiments of the present application determine M backup data and N auxiliary data from a plurality of measurement data sets obtained by sampling at least one echo signal based on multiple thresholds in a measurement period, calculate the total composite degree of each backup data, determine target data from the M backup data based on the total composite degree, and determine the measurement distance based on the target data. This technical solution enables precise measurement data fusion by using multiple emission signals with different emission powers, multi-gain, multi-threshold sampling, and multiple analysis areas for overall LiDAR control, thereby improving LiDAR measurement accuracy, enhancing the dynamic range of the LiDAR system, and reducing the close-range detection blind spot of the LiDAR.

BRIEF DESCRIPTION OF DRAWINGS

FIG. 1 shows a schematic flowchart of a radar ranging method provided by an embodiment;
FIG. 2 shows a schematic diagram of a framework of a transmitting circuit;
FIG. 3 shows a schematic diagram of a framework of a receiving circuit;
FIG. 4 shows a schematic diagram of a framework of a receiving circuit;
FIG. 5 shows a schematic diagram of the system framework of a LiDAR;
FIG. 6 shows a schematic diagram of the ranging control flow of a LiDAR;
FIG. 7 shows a schematic diagram of the transmission and reception signals and timing of a measurement period of a LiDAR;
FIG. 8 shows a schematic diagram of the division of the ranging range of a radar;
FIG. 9 shows a schematic diagram of the transmission and reception signals and timing of a measurement period of a LiDAR;
FIG. 10 shows a schematic diagram of a smoothing range;

FIG. 11 shows a block diagram of data fusion in a radar ranging method provided by an embodiment;
FIG. 12 shows a schematic structural diagram of a radar ranging device provided by an embodiment;
FIG. 13 shows a schematic structural diagram of an electronic device provided by an embodiment.

DETAILED DESCRIPTION

The following description will be made with reference to the accompanying drawings. In the description of the embodiments of this application, unless otherwise specified, "/" means "or", for example, A/B can mean A or B; "and/or" is merely a description of the association relationship of associated objects, indicating that there can be three relationships, such as A and/or B, which can mean: A alone, A and B together, or B alone. Additionally, in the description of the embodiments of this application, "multiple" means two or more.

The terms "first" and "second" are used for descriptive purposes only and cannot be understood as indicating or implying relative importance or implicitly specifying the number of technical features indicated. Therefore, the features defined as "first" and "second" may explicitly or implicitly include one or more of the features.

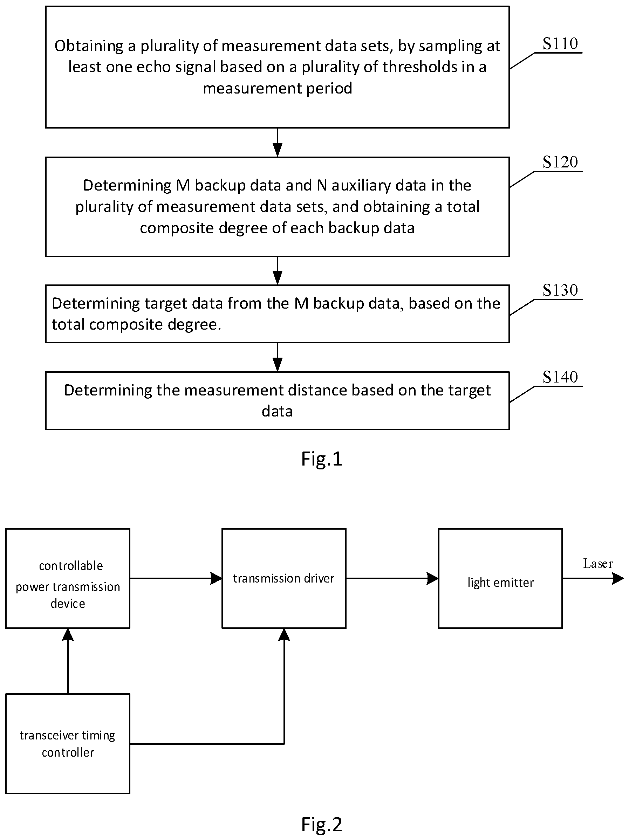

FIG. 1 shows a schematic flowchart of a radar ranging method provided in an embodiment. As shown in FIG. 1, the radar ranging method is applied to a laser radar, which includes a transmitting circuit and a receiving circuit. As shown in FIG. 2, FIG. 2 shows a block diagram of the transmitting circuit. The transmitting circuit includes a controllable power transmission device, a transmission driver, a light emitter, and a transceiver timing controller. The transmitting circuit generates power control signals with different transmission powers through the transceiver timing controller to the controllable power transmission device, which adjusts the transmission power according to the control signals and transmits the laser energy to the transmission driver. The transceiver timing controller also generates transmission control signals and transmits them to the transmission driver, which releases the laser energy to the light emitter upon receiving the transmission control signals, and the light emitter emits the laser. The transceiver timing controller control the timing and power of multiple transmissions.

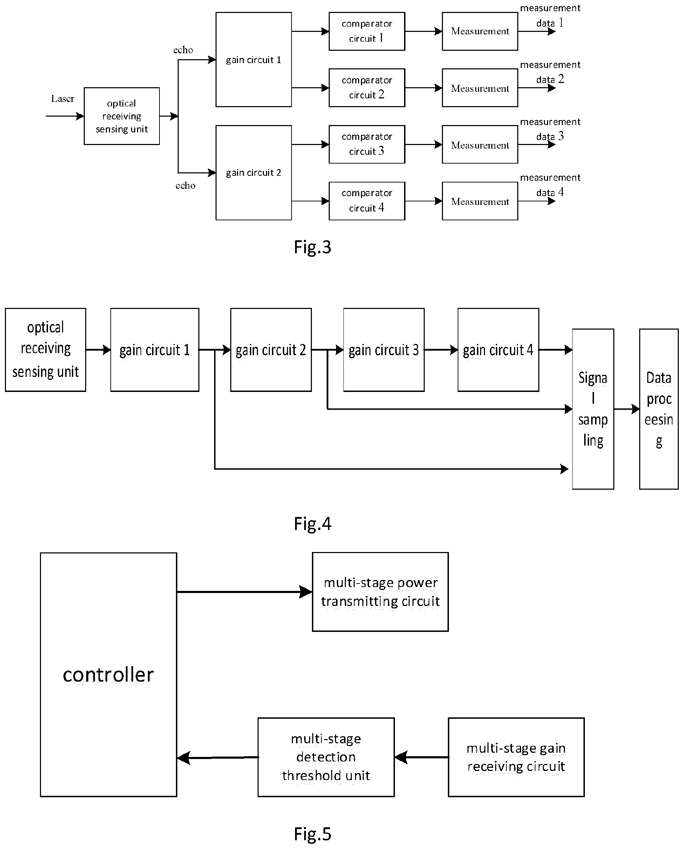

As shown in FIG. 3, FIG. 3 shows a block diagram of the receiving circuit, which includes an optical receiving sensing unit, multiple sets of gain circuits, and multiple sets of comparator circuits. Each set of gain circuits corresponds to a different receiving gain; high gain circuits achieve high gain amplification of the echo signals, and low gain circuits achieve low gain amplification of the echo signals. The output results of the same set of gain circuits can be sampled by different comparator circuits and then measured by the measurement unit to obtain different measurement data. FIG. 3 shows 2 sets of gain circuits as an example. The more groups of gain circuits, the more amplification levels for the echo signals, and the larger the achievable dynamic range of the entire system's reception. FIG. 3 also shows 2 sets of comparator circuits 323 as an example, and more comparator circuits can be added according to actual design needs. The sampling thresholds of each set of comparator circuits can be equal or unequal. The more comparator circuits, the more data can be obtained, and the larger the achievable dynamic range of the entire system's reception.

As shown in FIG. 4, FIG. 4 shows a block diagram of another receiving circuit, which is a multi-stage serial receiving system. This multi-stage serial receiving circuit can achieve multi-stage gain and has the same function as the receiving circuit in FIG. 3. The multi-stage serial receiving circuit includes an optical receiving sensing unit (such as PIN, APD, SPAD, SiPM), multi-stage gain circuits, a signal sampling module, and a measurement module. FIG. 4 shows a 4-stage amplification circuit; the signal sampling module can use comparator circuits to achieve its sampling function.

As shown in FIG. 5, FIG. 5 shows a schematic block diagram of the laser radar system. The laser radar system includes a controller, a multi-stage power transmitting circuit, a multi-stage gain receiving circuit, and a multi-stage detection threshold unit. The transmitting circuit, receiving circuit, and detection threshold unit do not necessarily all have multi-stage functions simultaneously. In an embodiment, the transmitting circuit is a multi-stage power transmitting circuit, while the detection threshold unit can be single-stage, or the receiving circuit is single-stage gain. In an embodiment, the transmitting circuit is a single-stage power transmitting circuit, while the detection threshold unit has multiple stages, or the receiving circuit has multiple-stage gain. In an embodiment, in one measurement period, the transmitting circuit emits three laser signals with three different transmission powers. The receiving circuit's amplification circuit has four gain stages. Each transmission result in four different gain results, so there are a total of 3*4=12 combinations of measurement results. If there are three detection thresholds for each receiving gain, then there are a total of 34*3=36 combinations of measurement results. These 36 measurement results are obtained from different power values, different receiving gains, and different detection thresholds, they are used to cover the reception and processing of high-energy and low-energy echo signals, thereby achieving a very large dynamic range expansion.

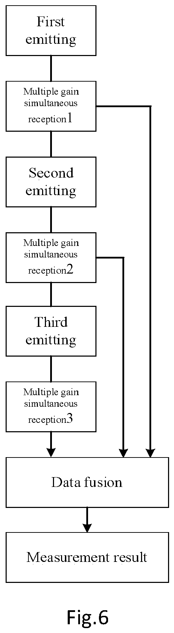

As shown in FIG. 6, FIG. 6 shows a schematic control flowchart of laser radar ranging. FIG. 6 takes three transmissions. For each transmission, multiple sets of measurement data can be obtained. In an embodiment, each transmission corresponds to three sets of data after receiving three gain stages. Emitting three times can result in nine sets of measurement data, and the nine sets of measurement data are fused to obtain the measurement result. The data fusion can select the most suitable result based on the distance and whether the echo energy is within the effective range.

The radar ranging method comprises:

S110: Obtaining a plurality of measurement data sets, by sampling at least one echo signal based on a plurality of thresholds in a measurement period.

In an embodiment, a measurement period of the laser radar includes at least one outgoing signal and a corresponding echo signal; one outgoing signal and its corresponding echo signal complete one detection, and a measurement distance is obtained through calculation. An echo signal can correspond to multiple threshold samples, and one measurement data set is obtained after each threshold sampling. The threshold can be understood as a reception threshold or a detection threshold.

When the laser radar performs ranging, the transmitting circuit will sequentially emit at least one outgoing signal during the measurement period, which is a laser signal. In the measurement period, the receiving circuit samples the echo signals corresponding to each outgoing signal based on multiple thresholds, obtaining multiple measurement data sets.

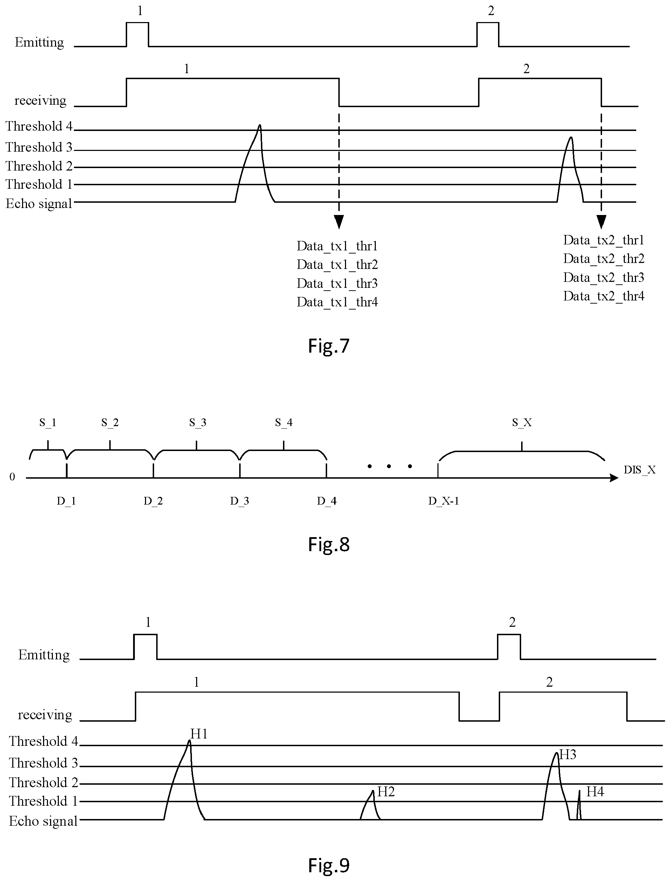

As shown in FIG. 7, FIG. 7 shows a schematic of the transmission and reception signals and timing in one measurement period of the laser radar. FIG. 7 shows that two outgoing signals are emitted sequentially in one measurement period of the laser radar, and the receiving circuit can receive two corresponding echo signals. The receiving circuit includes four different thresholds, namely threshold 1, threshold 2, threshold 3, and threshold 4. Each echo signal is sampled with the four different thresholds, resulting in eight measurement data sets in one measurement period. The four thresholds are used to sample the echo signal corresponding to the first outgoing signal, resulting in four measurement data sets, namely Data_tx1_thr1, Data_tx1_thr2, Data_tx1_thr3, and Data_tx1_thr4. The four thresholds are used to sample the echo signal corresponding to the second outgoing signal, resulting in four measurement data sets, namely Data_tx2_thr1, Data_tx2_thr2, Data_tx2_thr3, and Data_tx2_thr4.

Each echo signal is sampled based on one threshold to obtain one measurement data set. When there are multiple threshold samples, multiple measurement data sets are obtained for each echo signal. Each measurement data set includes at least one measurement data. Each measurement data set includes the measurement data obtained from the echo signal corresponding to the outgoing signal reflected by the target object, and include the measurement data of noise signals received by the laser radar.

S120: Determining M backup data and N auxiliary data in the plurality of measurement data sets, and obtaining a total composite degree of each backup data.

For the plurality of measurement data sets obtained in step S110, the measurement data included in all the measurement data sets are divided into M backup data and N auxiliary data, where M and N are positive integers, and a sum of M and N equal to the total quantity of measurement data included in the plurality of measurement data sets. In an embodiment, the total quantity of measurement data included in the plurality of measurement data sets is 10, then after data division, two backup data and eight auxiliary data are obtained. The backup data and auxiliary data cooperate in determining the measurement distance of the target object.

After obtaining M backup data through data division, the total composite degree of each backup data is calculated. The total composite degree indicates the similarity between each backup data and other backup data in the same measurement period, as well as with measurement data in adjacent measurement periods.

In an embodiment, the radar ranging method includes: dividing the ranging range of the radar into X sub-distance ranges according to a preset rule, where X is a positive integer greater than 1.

The preset rule can be setting multiple distance division points within the ranging range and dividing the ranging range into X sub-distance ranges according to these distance division points. The difference between two adjacent division points can be the same or different, the length of each sub-distance range can be the same or different. Since the amplitude of the echo signal is related to factors such as the measurement distance, the reflectivity of the target object, and the position of the target object, for echo signals with different amplitudes, the measurement data obtained by sampling with a certain threshold is more accurate. The ranging range is divided into multiple sub-distance ranges according to the preset rule based on the setting of multiple thresholds in the laser radar system.

As shown in FIG. 8, FIG. 8 shows a schematic of the division of the radar ranging range. In FIG. 8, 0~DIS_X represents the ranging range, D_1, D_2, ..., D_X-1 represent the distance division points, and D_1, D_2, ..., D_X-1 divide the ranging range into X sub-distance ranges, namely S_1, S_2, ..., S_X.

In an embodiment, determining M backup data and N auxiliary data in the plurality of measurement data sets includes: determining M backup data and N auxiliary data in the plurality of measurement data sets, based on the measurement data sampled according to the preset threshold corresponding to each sub-distance range.

A preset threshold sampling corresponding to each sub-distance range is set based on the position of each sub-distance range (such as in the far-distance section, middle-distance section, or near-distance section of the ranging range). The measurement data obtained by the preset threshold sampling corresponding to each sub-distance range has the highest confidence level. Therefore, the measurement data sampled according to the preset threshold corresponding to each sub-distance range is used to divide all the measurement data included in the plurality of measurement data sets, thereby obtaining M backup data and N auxiliary data. Determining the measurement distance using the obtained M backup data can improve the accuracy of the measurement distance.

In an embodiment, when emitting one outgoing signal in the measurement period, determining M backup data and N auxiliary data in the plurality of measurement data sets based on the measurement data sampled according to the preset threshold corresponding to each sub-distance range includes:

Using the measurement data sampled based on the preset threshold corresponding to each sub-distance range in the plurality of measurement data sets as the backup data, to obtain M backup data; and
Using the measurement data other than the M backup data in the plurality of measurement data sets as the auxiliary data, to obtain N auxiliary data.

In an embodiment, the transmitting circuit emits one outgoing signal in the measurement period, and a total quantity of measurement data included in the plurality of measurement data sets is 10, measurement data 1, measurement data 2, ..., measurement data 10, the sub-distance ranges include four ranges, namely range 1, range 2, ..., range 4. The measurement data obtained by the preset threshold sampling corresponding to range 1 is measurement data 1, the measurement data obtained by the preset threshold sampling corresponding to range 2 is measurement data 3, the measurement data obtained by the preset threshold sampling corresponding to range 3 is measurement data 5, and the measurement data obtained by the preset threshold sampling corresponding to range 4 is measurement data 8. Measurement data 1, measurement data 3, measurement data 5, and measurement data 8 are the backup data, with a total of four backup data; measurement data 2, measurement data 4, measurement data 6, measurement data 7, measurement data 9, and measurement data 10 are the auxiliary data, with a total of six auxiliary data.

In an embodiment, FIG. 9 shows a schematic of the transmission and reception signals and timing in one measurement period of the laser radar. In FIG. 9, the laser radar emits two outgoing signals sequentially in one measurement period: the first outgoing signal and the second outgoing signal. The transmission power P1 of the first outgoing signal is greater than the transmission power P2 of the second outgoing signal. The ranging range corresponding to the first outgoing signal is larger and is divided into four sub-distance ranges, while the ranging range corresponding to the second outgoing signal is smaller and is divided into three sub-distance ranges. The thresholds used for sampling the received echo signals are thresholds 1 to 4. The first receiving analysis area is used to receive the echo signal corresponding to the first outgoing signal, and the second analysis area is used to receive the echo signal corresponding to the second outgoing signal.

Sampling the echo signal with threshold 1 can obtain two measurement data, namely H11 and H21. Sampling the echo signal with thresholds 2, 3, and 4 can respectively obtain one measurement data, namely H12, H13, and H14. Measurement data H11, H12, H13, and H14 are all located in sub-distance range 2, where the preset threshold corresponding to sub-distance range 2 is threshold 3, making measurement data H13 the backup data, while the remaining measurement data H11, H12, and H14 are auxiliary data. Measurement data H21 is located in sub-distance range 4, where the preset threshold corresponding to sub-distance range 4 is threshold 1, making measurement data H21 the backup data. The measurement data obtained by the preset threshold sampling corresponding to each sub-distance range may include one, multiple, or none.

The echo signals include detection echoes reflected back by objects within the detection range of the outgoing signal, as well as interference echoes caused by ambient light entering the laser radar. When sampling detection echoes in the echo signal using different thresholds, a measurement data can be obtained within a sub-distance range. The measurement data obtained by sampling detection echoes using different thresholds are similar, making the measurement data obtained by the preset threshold sampling corresponding to the sub-distance range the backup data, and the measurement data obtained by sampling using other thresholds auxiliary data. The total composite degree value of the backup data is relatively large, and it is ultimately determined as the result output. Conversely, the measurement data obtained by sampling interference echoes using different thresholds are relatively scattered and evenly distributed across various sub-distance ranges. Even if confirmed as backup data, the total composite degree value calculated is small and will not be determined as the result output.

In an embodiment, when multiple outgoing signals with different transmission powers are emitted in the measurement period, determining M backup data and N auxiliary data in the plurality of measurement data sets based on the measurement data sampled according to the preset threshold corresponding to each sub-distance range includes:

Using the measurement data sampled according to the preset threshold corresponding to each sub-distance range in the plurality of measurement data sets for the outgoing signal with the preset transmission power as the backup data, to obtain M backup data;
Using the measurement data other than the M backup data in the plurality of measurement data sets as the auxiliary data, to obtain N auxiliary data.

In an embodiment, the echo signal corresponding to the first outgoing signal is sampled using four thresholds, obtaining a total of five measurement data: F11, F12, F13, F14, and F21. The echo signal corresponding to the second outgoing signal is sampled using four thresholds, obtaining a total of four measurement data: F31, F32, F33, and F41. Measurement data F11, F12, F13, and F14 are located in sub-distance range 2 corresponding to the first outgoing signal, and measurement data F21 is located in sub-distance range 4 corresponding to the first outgoing signal. Measurement data F31, F32, F33, and F41 are located in sub-distance range 2 corresponding to the second outgoing signal. The preset threshold corresponding to sub-distance range 2 for the first outgoing signal is threshold 3, making measurement data F13 the backup data, while measurement data F11, F12, and F14 are auxiliary data. The preset threshold corresponding to sub-distance range 4 for the first outgoing signal is threshold 1, making measurement data F21 the backup data. The preset threshold corresponding to sub-distance range 2 for the second outgoing signal is threshold 3, making measurement data F33 the backup data, while measurement data F31, F32, and F41 are auxiliary data.

In an embodiment, for the case where multiple outgoing signals with different transmission powers are emitted in the measurement period.

First, for the same sub-distance range, the preset thresholds for sampling the echo signals corresponding to different transmission powers can be different. Based on the embodiment in FIG. 9, in the ranging range of the first outgoing signal with transmission power P1, the preset threshold corresponding to sub-distance range 2 is threshold 3. In the ranging range of the second outgoing signal with transmission power P2, the preset threshold corresponding to sub-distance range 2 can be changed to threshold 2. Since P1 is greater than P2, when detecting the same target object in the ranging range, the amplitude of detection echo H1 is greater than the amplitude of detection echo H3, making the measurement data obtained by sampling detection echo H3 using the relatively lower threshold 2 more accurate.

Second, for the same sub-distance range, when sampling the echo signals corresponding to different transmission powers using the same threshold, the obtained measurement data can be different. Detection echoes H1 and H3 are obtained by detecting the same target object. The measurement data obtained after sampling should be the same. The amplitude of detection echo H1 is greater than the amplitude of detection echo H3. The measurement data obtained by sampling both detection echoes using threshold 2 will be different, with detection echo H1 being more saturated and the measurement data obtained by sampling smaller.

In an embodiment, obtaining the total composite degree of each backup data includes: determining the sub-distance range where each measurement data in the plurality of measurement data sets is located, to obtain the sub-distance ranges corresponding to the backup data and the auxiliary data;

determining a main composite degree, an auxiliary composite degree, and a cross composite degree of the backup data Si based on the backup data, the auxiliary data, and the sub-distance range corresponding to the backup data, where the backup data Si is any one of the M backup data, 1≤i≤M, and i is an integer;

performing weighted calculation on the main composite degree, the auxiliary composite degree, and the cross composite degree of the backup data Si to obtain the total composite degree of the backup data Si.

The ranging range has been divided into multiple sub-distance ranges, and the distance value of each measurement data is obtained through calculation, the measurement data in the plurality of measurement data sets are divided into sub-distance ranges based on the distance values to determine the sub-distance range where each measurement data is located. Once the sub-distance range of each measurement data is determined, the sub-distance ranges corresponding to each backup data and auxiliary data are naturally determined. In an embodiment, the ranging range is 0-200 meters, and the divided sub-distance ranges are [0,2), [2,5), [5,20), [20,200], the distance value of measurement data 1 is 4 meters, and the distance value of measurement data 2 is 50 meters, then the sub-distance range of measurement data 1 is [2,5), and the sub-distance range of measurement data 2 is [20,200]. If measurement data 1 is a backup data, then the sub-distance range corresponding to this backup data is [2,5). If measurement data 2 is an auxiliary data, then the sub-distance range corresponding to this auxiliary data is [20,200].

After obtaining the sub-distance range corresponding to each backup data and auxiliary data, the main composite degree, auxiliary composite degree, and cross composite degree of the backup data Si are calculated based on the backup data, auxiliary data, and their corresponding sub-distance ranges.

In an embodiment, the weight values for the main composite degree, auxiliary composite degree, and cross composite degree are preset. After obtaining the main composite degree, auxiliary composite degree, and cross composite degree of the backup data Si, a weighted calculation is performed on these composite degrees to obtain the total composite degree of the backup data Si, denoted as $Z_{Si}$. In an embodiment, a calculation formula for $Z_{Si}$ is as follows:

$$Z_{Si} = F1_{Si} \times w1 + F2_{Si} \times w2 + F3_{Si} \times w3;$$

where $F1_{Si}$ represents the main composite degree, $F2_{Si}$ represents the auxiliary composite degree, $F3_{Si}$ represents the cross composite degree, w1 represents the weight value for the main composite degree, w2 represents the weight value for the auxiliary composite degree, and w3 represents the weight value for the cross composite degree.

The above data weighted calculation is to bring the data back to a single data unit. In an embodiment, the total composite degree of the backup data Si is obtained without weighted calculation, by summing the main composite degree, auxiliary composite degree, and cross composite degree of the backup data Si,

$$Z_{Si} = F1_{Si} + F2_{Si} + F3_{Si}.$$

In an embodiment, determining the main composite degree of the backup data Si includes:

obtaining at least one backup data that meets a preset requirement from multiple adjacent measurement periods as a comparison data set;
comparing the backup data Si of the current measurement period with each backup data in the comparison data set in turn;
obtaining the main composite degree of the backup data Si based on the comparison result.

Regarding the calculation of the main composite degree: the preset requirement is that the outgoing signals corresponding to the backup data in the comparison data set and the backup data Si of the current measurement period have the same transmission power, and the thresholds corresponding to the backup data in the comparison data set and the backup data Si of the current measurement period are the same. In an embodiment, if the transmission power of the outgoing signal corresponding to the backup data Si obtained in the current measurement period is P1, and the backup data Si is obtained by sampling using threshold C1, the outgoing signal corresponding to backup data 11 obtained in the previous measurement period has a transmission power of P1, and backup data 11 is obtained by sampling using threshold C1. The outgoing signal corresponding to backup data 31 obtained in the next measurement period has a transmission power of P1, and backup data 31 is obtained by sampling using threshold C1. Backup data 11 and backup data 31 are used as the comparison data set, as the transmission power and threshold corresponding to each of backup data 11 and backup data 31 are the same as those corresponding to backup data Si.

Based on the embodiment in FIG. 9, measurement data F13, F21, and F33 are backup data. In an embodiment, the comparison data set for obtaining measurement data F13, obtaining the echo signal corresponding to the first outgoing signal and sampling it using threshold 3 from one adjacent measurement period of the current measurement period to obtain measurement data, if available, serves as the backup data in the comparison data set; if not available, the next adjacent measurement period is checked. The comparison data set can be obtained from only one adjacent measurement period of the current measurement period or from multiple adjacent measurement periods, such as five adjacent measurement periods. The methods for obtaining the comparison data sets for measurement data F21 and F33 are similar.

After obtaining the comparison data set, each backup data in the comparison data set is compared with backup data Si, and the main composite degree of backup data Si is set based on the comparison result. The main composite degree indicates the similarity between the backup data Si obtained in the current measurement period and the backup data obtained in adjacent measurement periods that meet the preset requirements. Since the probability of detecting the same target object in adjacent measurement periods is high, the similarity of the detection echoes obtained is high. When comparing the backup data of the current detection period with the backup data of adjacent detection periods, the main composite degree calculated for the real detection echo as backup data is higher, while the main composite degree calculated for the noise echo caused by ambient light as backup data is lower.

In an embodiment, obtaining the main composite degree of the backup data Si based on the comparison result includes:

when the difference between one backup data in the comparison data set and the backup data Si of the current measurement period is less than a first preset value, adding one to the main composite degree of the backup data Si;
iterating through each backup data in the comparison data set to obtain the main composite degree of the backup data Si; or,
when the main composite degree of the backup data Si is greater than or equal to the main composite degree threshold, setting the main composite degree of the backup data Si to the main composite degree threshold.

For each iteration of a backup data in the comparison data set, the difference between the backup data Si and each iterated backup data in the comparison data set is calculated. This difference is recorded as the first difference. The first difference obtained in each iteration is compared with the first preset value. If the first difference is less than the first preset value, the main composite degree of the backup data Si is incremented by one. This process is repeated to obtain the final main composite degree of the backup data Si. In an embodiment, if the initial main composite degree of the backup data Si is 0, and the first difference obtained in the first iteration is less than the first preset value, the main composite degree of the backup data Si is 1. If the first difference obtained in the second iteration is less than the first preset value, the main composite degree of the backup data Si is 1+1=2. If the first difference obtained in the third iteration is less than the first preset value, the main composite degree of the backup data Si is 1+1+1=3, and so on, obtaining the final main composite degree of the backup data Si.

After calculating the main composite degree of the backup data Si using the above method, to reduce the computation load, the main composite degree of the backup data Si is compared with the main composite degree threshold after each iteration. If the main composite degree of the backup data Si is greater than or equal to the main composite degree threshold, the main composite degree threshold is set as the main composite degree of the backup data Si, and the iteration is stopped.

In an embodiment, determining the auxiliary composite degree of the backup data Si includes:

comparing the backup data Si with the N auxiliary data in turn;
obtaining the auxiliary composite degree of the backup data Si based on the comparison result.

Regarding the calculation of the auxiliary composite degree: The backup data Si is compared with each of the N auxiliary data, and the auxiliary composite degree of the backup data Si is set based on the comparison result. The auxiliary composite degree indicates the similarity between the backup data Si and the auxiliary data. In one detection period, the probability of obtaining similar measurement data by detecting the echo signals using different transmission powers of outgoing signals and different thresholds is high. The auxiliary composite degree of the detection echo signal's backup data is higher, while the auxiliary composite degree calculated for noise or interference data as backup data is lower.

Based on the embodiment in FIG. 9, measurement data F13, F21, and F33 are backup data, while measurement data F11, F12, F14, F31, F32, and F41 are auxiliary data.

In an embodiment, to obtain the auxiliary composite degree of measurement data F13, the backup data F13 is compared with auxiliary data F11, F12, F14, F31, F32, and F41, yielding comparison results. Auxiliary data F11, F12, and F14, as well as backup data F13, are measurement data obtained from the same detection echo H1 using different thresholds, thus having high similarity. Auxiliary data F31 and F32 correspond to detection echo H3, which is obtained from detecting the same target object as detection echo H1, hence also having high similarity. Auxiliary data F41 is measurement data obtained from noise echo H4 sampled with threshold 1, and has low similarity with backup data F13. Therefore, out of the six auxiliary data, five have high similarity with backup data F13.

In an embodiment, to obtain the auxiliary composite degree of measurement data F21, the backup data F21 is compared with auxiliary data F11, F12, F14, F31, F32, and F41, yielding comparison results. Backup data F21 is measurement data obtained from noise echo H2 sampled with threshold 1, and F11, F12, F14, F31, F32, and F41 are not in the same sub-distance range, resulting in low similarity. Therefore, all six auxiliary data have low similarity with backup data F21.

In an embodiment, obtaining the auxiliary composite degree of the backup data Si based on the comparison results includes:

when the difference between one of the N auxiliary data and the backup data Si is less than a second preset value, adding one to the auxiliary composite degree of the backup data Si;
iterating through each of the N auxiliary data to obtain the auxiliary composite degree of the backup data Si; or,
when the auxiliary composite degree of the backup data Si is greater than or equal to the auxiliary composite degree threshold, setting the auxiliary composite degree of the backup data Si to the auxiliary composite degree threshold.

For each auxiliary data among the N auxiliary data, the difference between the backup data Si and each auxiliary data is calculated, recorded as the second difference, and compared with the second preset value. If the second difference is less than the second preset value, the auxiliary composite degree of the backup data Si is incremented by one. This process is repeated to obtain the final auxiliary composite degree of the backup data Si. In an embodiment, if the initial auxiliary composite degree of the backup data Si is 0, and the first iteration yields a second difference less than the second preset value, the auxiliary composite degree of the backup data Si becomes 1. If the second iteration also yields a second difference less than the second preset value, the auxiliary composite degree of the backup data Si becomes 1+1=2, the second difference obtained by the third traversal is less than the second preset value, and the auxiliary complex degree of the candidate data Si is 1+1+1=3. This process continues to obtain the final auxiliary composite degree of the backup data Si.

After calculating the auxiliary composite degree of the backup data Si using the above method, to reduce computation load, the auxiliary composite degree of the backup data Si is compared with the auxiliary composite degree threshold after each iteration. If the auxiliary composite degree of the backup data Si is greater than or equal to the auxiliary composite degree threshold, the auxiliary composite degree threshold is set as the auxiliary composite degree of the backup data Si, and the iteration stops.

In an embodiment, determining the cross composite degree of the backup data Si includes:

determining the sub-distance range where the backup data Si is located as the middle sub-distance range, and obtaining at least one target sub-distance range from the K sub-distance ranges excluding the middle sub-distance range, where K≤X, and K is a positive integer;

comparing the backup data Si with the backup data in at least one target sub-distance range in turn; obtaining the cross composite degree of the backup data Si based on the comparison result.

Since not every sub-distance range contains backup data, only the sub-distance ranges containing backup data participate in the cross composite degree calculation. In the X sub-distance ranges, K sub-distance ranges contain backup data. The cross composite degree calculation involves determining target sub-distance ranges from these K sub-distance ranges. The target sub-distance ranges can be adjacent to the middle sub-distance range, or they can be non-adjacent sub-distance ranges, it can also be the other K-1 sub-distance intervals except the middle sub-distance interval.

Regarding the calculation of the cross composite degree: The sub-distance range where the backup data Si is located is determined as the middle sub-distance range, and at least one sub-distance range from the K sub-distance ranges excluding the middle sub-distance range is determined as the target sub-distance range. In an embodiment, if the sub-distance ranges 2, 3, 4, and 6 contain backup data (X=6, K=4), and the sub-distance range 3 where backup data Si is located is the middle sub-distance range, then at least one of the sub-distance ranges 2, 4, and 6 is determined as the target sub-distance range. It could be the sub-distance range adjacent to sub-distance range 3, such as sub-distance range 3 itself, or it could be two adjacent sub-distance ranges, such as sub-distance ranges 2 and 4, or it could be a non-adjacent sub-distance range such as sub-distance range 6. Alternatively, it could be the remaining sub-distance ranges excluding sub-distance range 3, such as sub-distance ranges 2, 4, and 6.

After determining the target sub-distance ranges, the backup data in the target sub-distance ranges are identified, and the backup data Si is compared with each backup data in the target sub-distance ranges, yielding comparison results. In an embodiment, if backup data Si is S1, the target sub-distance ranges include three ranges: sub-distance ranges 2, 3, and 4. Sub-distance ranges 2 and 4 each contain a backup data, while sub-distance range 3 has none. Backup data Si is then compared with the backup data in sub-distance ranges 2 and 4 sequentially, obtaining comparison results, and setting the cross composite degree of the backup data Si based on these results. The cross composite degree indicates the similarity between backup data Si and the backup data in the target sub-distance ranges.

Based on the embodiment in FIG. 9, measurement data F13, F21, and F33 are backup data, while measurement data F11, F12, F14, F31, F32, and F41 are auxiliary data.

In an embodiment, to obtain the cross composite degree of measurement data F13, measurement data F13 is located in sub-distance range 2, and sub-distance ranges 2 and 4 contain measurement data. Sub-distance range 4 is determined as the target sub-distance range, and the cross composite degree calculation is performed for measurement data F13 and F21.

Echo signals near the boundary of sub-distance ranges result in measurement data falling into adjacent sub-distance ranges after sampling with different thresholds, and they may be determined as backup data in two adjacent sub-distance ranges. Since they are measurements of the same detection echo or interference echo, the obtained measurement data are similar, resulting in a high cross composite degree.

In an embodiment, obtaining the cross composite degree of the backup data Si based on the comparison results includes:

when the difference between one backup data in at least one target sub-distance range and the backup data Si is less than a third preset value, adding one to the cross composite degree of the backup data Si; iterating through each backup data in at least one target sub-distance range to obtain the cross composite degree of the backup data Si; or, when the cross composite degree of the backup data Si is greater than or equal to the cross composite degree threshold, setting the cross composite degree of the backup data Si to the cross composite degree threshold.

For each backup data in at least one target sub-distance range, the difference between the backup data Si and each backup data in the target sub-distance range is calculated, recorded as the third difference, and compared with the third preset value. If the third difference is less than the third preset value, the cross composite degree of the backup data Si is incremented by one. This process continues to obtain the final cross composite degree of the backup data Si. For example, if the initial cross composite degree of the backup data Si is 0, and the first iteration yields a third difference less than the third preset value, the cross composite degree of the backup data Si becomes 1. If the second iteration also yields a third difference less than the third preset value, the cross composite degree of the backup data Si becomes 1+1=2. This process continues to obtain the final cross composite degree of the backup data Si.

After calculating the cross composite degree of the backup data Si using the above method, to reduce computation load, the cross composite degree of the backup data Si is compared with the cross composite degree threshold after each iteration. If the cross composite degree of the backup data Si is greater than or equal to the cross composite degree threshold, the cross composite degree threshold is set as the cross composite degree of the backup data Si, and the iteration stops.

S130: Determining target data from the M backup data, based on the total composite degree.

After calculating the total composite degree of each backup data, the backup data with the highest total composite degree among the M backup data is determined as the target data used to determine the measurement distance.

In an embodiment, determining the target data from the M backup data based on the total composite degree includes: determining the backup data with the highest total composite degree from the M backup data as the target data.

After obtaining the total composite degree of each of the M backup data, the total composite degrees are sorted, and the backup data with the highest total composite degree is identified, then the target data is determined based on the backup data with the highest total composite degree.

In an embodiment, determining the target data from the backup data with the highest total composite degree from the M backup data includes:

when a quantity of the backup data with the highest total composite degree from the M backup data is one, determining the backup data with the highest total composite degree as the target data;
when one quantity of the backup data with the highest total composite degree from the M backup data is greater than one, determining the backup data with the highest total composite degree and the largest distance value as the target data.

Considering that the backup data with the highest total composite degree among the M backup data can be single or multiple, different methods are used to determine the target data. If the backup data with the highest total composite degree is single, it is determined as the target data, indicating that the backup data with the highest total composite degree has the highest confidence among all the backup data. If there are multiple backup data with the highest total composite degree, the target data is determined as the backup data with the highest total composite degree and the largest distance value. Since interference signals are relatively weaker at long distances than at short distances, the confidence of measurement data obtained from echo signals at long distances is higher. Therefore, if there are multiple backup data with the highest total composite degree, the backup data with the highest total composite degree and the largest distance value among the M backup data is determined as the target data.

S140: Determining the measurement distance based on the target data.

In an embodiment, determining the measurement distance based on the target data includes:

obtaining the endpoint value of the sub-distance range and constructing a smoothing range with the endpoint value as the center;
determining whether the target data is located in the smoothing range;

determining the measurement distance based on the determination result.

The endpoint value of the sub-distance range is the distance division point, including the maximum and minimum values of the sub-distance range. A smoothing range is constructed with the endpoint value of each sub-distance range as the center and a preset distance smoothing adjustment value. The distance smoothing adjustment values are D_smooth1 and D_smooth2. Suppose the endpoint value is D_X, then the smoothing range is [D_X-D_smooth1, D_X+D_smooth2]. Multiple smoothing ranges are constructed in this way. As shown in FIG. 8, if the endpoint value is D_1, then the smoothing range is [D_1-D_smooth1, D_1+D smooth2]. If the endpoint value is D_2, then the smoothing range is [D_2-D_smooth1, D_2+D_smooth2], and so on. The values of |D_smooth1| and |D_smooth2| can be the same or different. The smoothing range can be symmetric or asymmetric with respect to the endpoint value. If |D_smooth1| =|D_smooth2| the smoothing range is symmetric with respect to the endpoint value. If |D_smooth1| is not equal to |D_smooth2|, the smoothing range is asymmetric with respect to the endpoint value.

After constructing the smoothing range, it is determined whether the target data is within the smoothing range. The method for determining the measurement distance differs based on whether the target data is within the smoothing range.

In an embodiment, determining the measurement distance based on the determination result includes the following solution:

when the target data is not in the smoothing range, determining the measurement distance equal to the target data;
when the target data is in the smoothing range, determining the sub-distance range where the target data is located as the first sub-distance range, and determining the sub-distance range adjacent to the first sub-distance range within the smoothing range as the second sub-distance range;
obtaining the first threshold corresponding to the first sub-distance range and the second threshold corresponding to the second sub-distance range;
determining the measurement data within the smoothing range based on the first threshold as the first distance, and determining the measurement data within the smoothing range based on the second threshold as the second distance;
performing a weighted calculation on the first distance and the second distance to obtain the measurement distance.

If the target data is not in the smoothing range, it indicates that the target data is not at the boundary of two adjacent sub-distance ranges. The target data is accurate and does not require smoothing adjustment, so the target data is determined as the measurement data, and the measurement distance is equal to the target data.

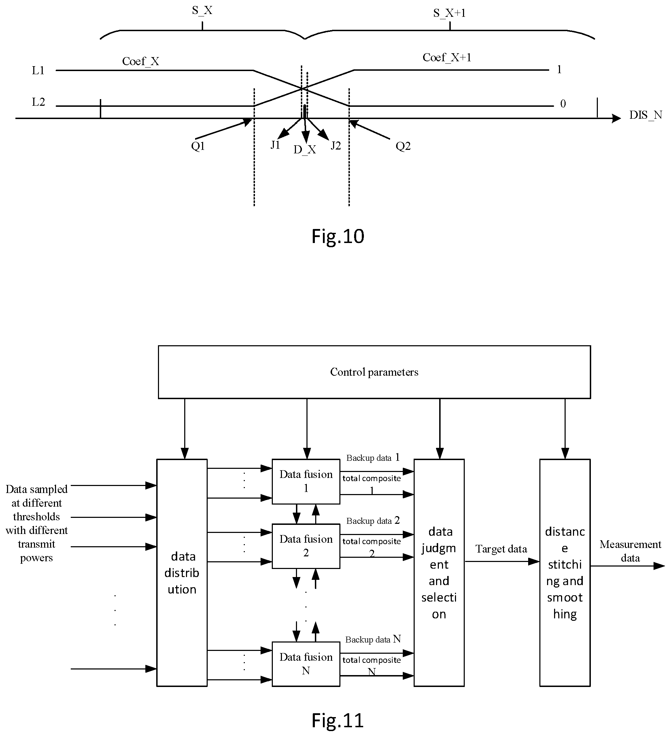

If the target data is within the smoothing range, it indicates that the target data may have deviations, such as detection echoes or noise echoes near the boundary (a signal peak in the echo signal). The measurement results obtained by sampling with different thresholds may fall into different sub-distance ranges. To reduce measurement fluctuations at the boundary, smoothing adjustment is necessary. The sub-distance range where the target data is located is determined as the first sub-distance range, and the adjacent sub-distance range within the smoothing range is determined as the second sub-distance range. As shown in FIG. 10, FIG. 10 shows a schematic of the smoothing range. In an embodiment, if the smoothing range where the target data is located is [Q1, Q2], and D_X is within [Q1, Q2], Q1=D_X-D_smooth1, Q2=D_X+D_smooth2. If the target data is in sub-distance range S_X, then S_X is the first sub-distance range. If sub-distance range S_X+1 intersects with [Q1,Q2], indicating that S_X+1 is within [Q1, Q2] and adjacent to S_X, then S_X+1 is the second sub-distance range.

The first threshold corresponding to the first sub-distance range and the second threshold corresponding to the second sub-distance range are obtained. The first threshold is the preset threshold corresponding to the first sub-distance range, and the second threshold is the preset threshold corresponding to the second sub-distance range. The first threshold corresponding to the first sub-distance range indicates that the echo signals within the first sub-distance range have the highest confidence when sampled with the first threshold compared to other thresholds. For example, for a laser radar using fixed transmission power, the measurement data obtained by sampling echo signals with the first threshold within the first sub-distance range are backup data. For a laser radar using multiple transmission powers, the measurement data obtained by sampling echo signals with the first threshold corresponding to the preset transmission power within the first sub-distance range are backup data. The second threshold corresponding to the second sub-distance range has a similar function.

After obtaining the first and second thresholds, the measurement data within the smoothing range obtained by sampling with the first threshold are used as the first distance, and the measurement data within the smoothing range obtained by sampling with the second threshold are used as the second distance. In an embodiment, the measurement data obtained by sampling with the first threshold include measurement data 11-15, and measurement data 15 is within the smoothing range, so measurement data 15 is the first distance. The measurement data obtained by sampling with the second threshold include measurement data 21-25, and measurement data 22 is within the smoothing range, so measurement data 22 is the second distance.

After obtaining the first and second distances, a weighted calculation is performed to obtain the measurement distance. As shown in FIG. 10, the first distance is represented as J1, and the second distance is represented as J2. The weight values corresponding to the first and second distances are determined based on the weight functions corresponding to the sub-distance ranges of the first and second distances, respectively. The weight function corresponding to the sub-distance range of the first distance is L1, and the weight function corresponding to the sub-distance range of the second distance is L2. The value obtained by substituting J1 into the weight function L1 is the weight value corresponding to J1, denoted as Coef_x. Similarly, the value obtained by substituting J2 into the weight function L2 is the weight value corresponding to J2, denoted as Coef_x+1. The measurement distance is then calculated as (J1×Coef_x + J2×Coef_x+1). This method of obtaining the measurement distance avoids the result deviations caused by sampling echo signals near the endpoint value with different thresholds, by performing a weighted calculation using values on both sides of the endpoint value, achieving a smoothing effect.

By obtaining multiple measurement data sets sampled based on multiple thresholds in a measurement period, determining M backup data and N auxiliary data from the plurality of measurement data sets, obtaining the total composite degree of each backup data, determining the target data from the M backup data based on the total composite degree, and determining the measurement distance based on the target data, enables the laser radar to use multiple outgoing signals with different transmission powers, multiple gains, multiple threshold samplings, and multiple analysis areas for overall control during radar ranging. It also fuses the measurement data obtained from multiple outgoing signals with different transmission powers, multiple gains, and multiple threshold samplings, resulting in precise measurement data. This not only improves the measurement accuracy of the laser radar but also enhances the dynamic range of the laser radar system and reduces the near-range detection blind spot of the laser radar.

FIG. 11 shows a data fusion block diagram of a radar ranging method provided in an embodiment. As shown in FIG. 11, during ranging, the laser radar emits multiple outgoing signals sequentially in a measurement period, with each outgoing signal having a different transmission power. Since the threshold sampling of the laser radar includes multiple thresholds, multiple measurement data can be obtained. These measurement data correspond to different transmission powers and threshold samplings, resulting in multiple sets of measurement data with different transmission powers and threshold samplings. After obtaining multiple sets of measurement data, data distribution, data fusion, data judgment and selection, and distance stitching and smoothing are performed to obtain the measurement distance. Data distribution, data fusion, data judgment and selection, and distance stitching and smoothing are all controlled by parameters.

Regarding data distribution: The ranging range of the laser radar is divided into X sub-distance ranges according to a preset rule, and each measurement data is assigned to a sub-distance range to determine the sub-distance range corresponding to each measurement data, thereby achieving the distribution of sub-distance ranges for each measurement data. After distributing sub-distance ranges for each measurement data, the measurement data obtained by sampling with the preset threshold corresponding to each sub-distance range are divided into M backup data and N auxiliary data. Since each measurement data has been assigned a corresponding sub-distance range, the sub-distance ranges corresponding to the backup data and auxiliary data are also obtained.

Regarding data fusion: For each backup data among the M backup data, denoted as Si (i=1,2,..,M), the main composite degree, auxiliary composite degree, and cross composite degree of Si are calculated based on the backup data, auxiliary data, and their respective sub-distance ranges. A weighted calculation is performed on the main composite degree, auxiliary composite degree, and cross composite degree to obtain the total composite degree of Si, resulting in the total composite degrees of the M backup data.

Regarding data judgment and selection: the backup data with the highest total composite degree among the M backup data is determined as the target data. If there is a single backup data with the highest total composite degree among the M backup data, it is determined as the target data. If there are multiple backup data with the highest total composite degree among the M backup data, the backup data with the highest total composite degree and the largest distance value is determined as the target data.

Regarding distance stitching and smoothing: a smoothing range is constructed with the endpoint value of each sub-distance range as the center. It is determined whether the target data is within the smoothing range. If the target data is not within the smoothing range, it is determined as the measurement data. If the target data is within the smoothing range, the sub-distance range where the target data is located is determined as the first sub-distance range, and the adjacent sub-distance range within the smoothing range is determined as the second sub-distance range. The first threshold corresponding to the first sub-distance range and the second threshold corresponding to the second sub-distance range are obtained. The measurement data within the smoothing range obtained by sampling with the first threshold are used as the first distance, and the measurement data within the smoothing range obtained by sampling with the second threshold are used as the second distance. The first and second distances are then weighted to obtain the precise measurement distance.

The laser radar to use multiple outgoing signals with different transmission powers, multiple gains, multiple threshold samplings, and multiple analysis areas for overall control during radar ranging. It also fuses the measurement data obtained from multiple outgoing signals with different transmission powers, multiple gains, and multiple threshold samplings, resulting in precise measurement data. This not only improves the measurement accuracy of the laser radar but also enhances the dynamic range of the laser radar system and reduces the near-range detection blind spot of the laser radar.

The device embodiment of this application can be used to implement the method embodiment.

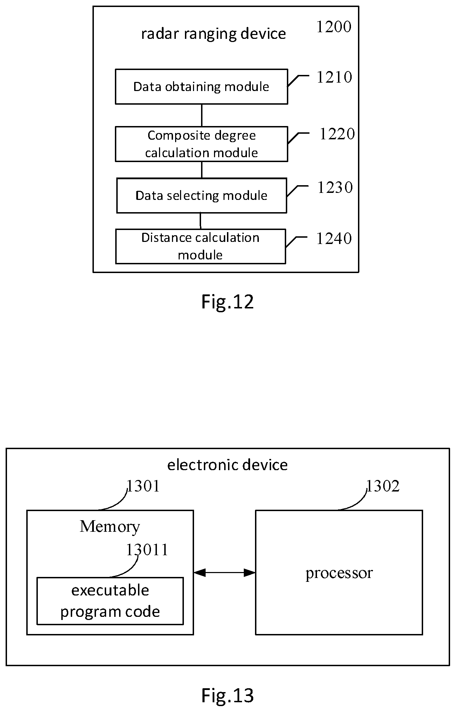

FIG. 12 shows a structural schematic diagram of a radar ranging device provided in an embodiment. As shown in FIG. 12, the radar ranging device 1200 includes:

Data obtaining module 1210, configured to obtain multiple measurement data sets by sampling at least one echo signal based on multiple thresholds in a measurement period, where each measurement data set is obtained by sampling the echo signal based on one threshold, and each measurement data set includes at least one measurement data;

Composite degree calculation module 1220, configured to determine M backup data and N auxiliary data in the plurality of measurement data sets and obtain a total composite degree of each backup data, where M and N are positive integers, and the sum of M and N is equal to the total quantity of measurement data included in the plurality of measurement data sets;

Data selecting module 1230, configured to determine target data from the M backup data based on the total composite degree;

Distance calculation module 1240, configured to determine a measurement distance based on the target data.

In an embodiment, the radar ranging device 1200 includes:

A range division unit, configured to divide the radar ranging range into X sub-distance ranges according to a preset rule, where X is a positive integer greater than 1;

The composite degree calculation module 1220 is specifically used to determine M backup data and N auxiliary data in the plurality of measurement data sets based on the measurement data obtained by the preset threshold sampling corresponding to each sub-distance range.

In an embodiment, when emitting one outgoing signal in the measurement period, the composite degree calculation module 1220 includes:

A first obtaining unit, configured to use the measurement data sampled based on the preset threshold corresponding to each sub-distance range in the plurality of measurement data sets as the backup data to obtain M backup data;
A first selecting unit, configured to use the measurement data other than the M backup data in the plurality of measurement data sets as the auxiliary data to obtain N auxiliary data.

In an embodiment, when emitting multiple outgoing signals with different transmission powers in the measurement period, the composite degree calculation module 1220 includes:

A second obtaining unit, configured to use the measurement data obtained by sampling the echo signal corresponding to the outgoing signal with the preset transmission power based on the preset threshold corresponding to each sub-distance range as the backup data to obtain M backup data;
A second selecting unit, configured to use the measurement data other than the M backup data in the plurality of measurement data sets as the auxiliary data to obtain N auxiliary data.

In an embodiment, the composite degree calculation module 1220 includes:

A range determination unit, configured to determine the sub-distance range where each measurement data in the plurality of measurement data sets is located to obtain the sub-distance ranges corresponding to the backup data and the auxiliary data;
A first calculation unit, configured to determine the main composite degree, auxiliary composite degree, and cross composite degree of the backup data Si based on the backup data, the auxiliary data, and the sub-distance range corresponding to the backup data, where the backup data Si is any one of the M backup data, $1 \leq i \leq M$, and i is an integer;
A second calculation unit, configured to perform weighted calculation on the main composite degree, auxiliary composite degree, and cross composite degree of the backup data Si to obtain the total composite degree of the backup data Si.

In an embodiment, the first calculation unit includes:

A data set determination sub-unit, configured to obtain at least one backup data that meets a preset requirement from multiple adjacent measurement periods as a comparison data set, where the preset requirement is that the outgoing signal corresponding to the backup data in the comparison data set and the outgoing signal corresponding to the backup data Si in the current measurement period have the same transmission power, and the thresholds corresponding to the backup data in the comparison data set and the backup data Si in the current measurement period are the same;
A first comparison sub-unit, configured to compare the backup data Si of the current measurement period with each backup data in the comparison data set in turn;
A first determination sub-unit, configured to obtain the main composite degree of the backup data Si based on the comparison result.

In an embodiment, the first determination sub-unit is used to: add one to the main composite degree of the backup data Si when the difference between one backup data in the comparison data set and the backup data Si in the current measurement period is less than a first preset value; iterate through each backup data in the comparison data set to obtain the main composite degree of the backup data Si; or set the main composite degree of the backup data Si to the main composite degree threshold when the main composite degree of the backup data Si is greater than or equal to the main composite degree threshold.

In an embodiment, the first calculation unit includes:

A second comparison sub-unit, configured to compare the backup data Si with the N auxiliary data in turn;
A second determination sub-unit, configured to obtain the auxiliary composite degree of the backup data Si based on the comparison result.

In an embodiment, the second determination sub-unit is used to: add one to the auxiliary composite degree of the backup data Si when the difference between one of the N auxiliary data and the backup data Si is less than a second preset value; iterate through each of the N auxiliary data to obtain the auxiliary composite degree of the backup data Si; or set the auxiliary composite degree of the backup data Si to the auxiliary composite degree threshold when the auxiliary composite degree of the backup data Si is greater than or equal to the auxiliary composite degree threshold.

In an embodiment, the first calculation unit includes:

A target range determination sub-unit, configured to determine the sub-distance range where the backup data Si is located as the middle sub-distance range, and obtain at least one target sub-distance range from the K sub-distance ranges excluding the middle sub-distance range, where $K \leq X$, and K is a positive integer;
A third comparison sub-unit, configured to compare the backup data Si with the backup data in at least one target sub-distance range in turn;
A third determination sub-unit, configured to obtain the cross composite degree of the backup data Si based on the comparison result.

In an embodiment, the third determination sub-unit is used to: add one to the cross composite degree of the backup data Si when the difference between one backup data in at least one target sub-distance range and the backup data Si is less than a third preset value; iterate through each backup data in at least one target sub-distance range to obtain the cross composite degree of the backup data Si; or set the cross composite degree of the backup data Si to the cross composite degree threshold when the cross composite degree of the backup data Si is greater than or equal to the cross composite degree threshold.

In an embodiment, the data selecting module 1230 is used to determine the target data from the backup data with the highest total composite degree among the M backup data.

In an embodiment, the data selecting module 1230 includes:

A first selecting unit, configured to determine the backup data with the highest total composite degree as the target data when there is a single backup data with the highest total composite degree among the M backup data;

A second selecting unit, configured to determine the backup data with the highest total composite degree and the largest distance value as the target data when there are multiple backup data with the highest total composite degree among the M backup data.

In an embodiment, the distance calculation module 1240 includes:

A range construction unit, configured to obtain the endpoint value of the sub-distance range and construct a smoothing range with the endpoint value as the center;

A data judgment unit, configured to determine whether the target data is within the smoothing range;

A distance determination unit, configured to determine the measurement distance based on the judgment result.

In an embodiment, the distance determination unit includes:

A first distance determination sub-unit, configured to determine the measurement distance equal to the target data when the target data is not within the smoothing range;

A second distance determination sub-unit, configured to determine the sub-distance range where the target data is located as the first sub-distance range when the target data is within the smoothing range, and determine the sub-distance range adjacent to the first sub-distance range within the smoothing range as the second sub-distance range; obtain the first threshold corresponding to the first sub-distance range and the second threshold corresponding to the second sub-distance range; determine the measurement data within the smoothing range obtained by sampling with the first threshold as the first distance, and determine the measurement data within the smoothing range obtained by sampling with the second threshold as the second distance; perform a weighted calculation on the first distance and the second distance to obtain the measurement distance.

The radar ranging device provided in the above embodiments is described by dividing the functions into modules for illustration purposes only. The functions can be distributed among different module, the internal structure of the device can be divided into different functional modules to complete all or part of the functions described above. For details not disclosed in the device embodiments, please refer to the radar ranging method embodiment described above.

The serial numbers of the above embodiments are for illustrative purposes only and do not represent the merits of the embodiments.

FIG. 13 shows a structural schematic diagram of an electronic device provided in an embodiment. As shown in FIG. 13, the electronic device 1300 includes: a memory 1301 and a processor 1302, where the memory 1301 stores executable program code 13011, and the processor 1302 is configured to call and execute the executable program code 13011 to perform a radar ranging method.

The embodiment can divide the functional modules of the electronic device according to the method example described above, for example, corresponding to each functional module, or integrating two or more functions into one processing module. The integrated module can be implemented in hardware form. It should be noted that the division of modules in this embodiment is illustrative and is only a logical function division.

When each functional module is divided, the electronic device can include: a data obtaining module, a composite degree calculation module, a data selecting module, and a distance calculation module. It should be noted that all relevant content of each step in the method embodiment can be referred to the functional description of the corresponding functional module.

The electronic device provided in this embodiment is used to perform the radar ranging method described above, and thus can achieve the same effects as the above method.

When using an integrated unit, the electronic device can include a processing module and a storage module. The processing module can be used to control and manage the operations of the electronic device. The storage module can be used to support the execution of mutual program codes and data by the electronic device.

The processing module can be a processor or a controller, which can realize or execute various exemplary logic blocks, modules, and circuits contemplated by the present application. The processor can also be a combination that realizes computing functions, such as a combination of one or more microprocessors, a combination of digital signal processing (DSP) and microprocessors, and so on. The storage module can be a memory.

This embodiment also provides a computer-readable storage medium, which stores computer program code. When the computer program code is executed on a computer, it enables the computer to perform the radar ranging method described in the above embodiment.

This embodiment also provides a computer program product. When the computer program product is executed on a computer, it enables the computer to perform the steps of the radar ranging method described in the above embodiment.

The electronic device provided in this embodiment can be a chip, a component, or a module. The electronic device can include a connected processor and a memory, where the memory is used to store instructions. When the electronic device runs, the processor can call and execute the instructions to enable the chip to perform the radar ranging method described in the above embodiment.

The electronic device, computer-readable storage medium, computer program product, or chip provided in this embodiment is used to execute the corresponding radar ranging method provided above, and thus the beneficial effects that can be achieved can be referred to the beneficial effects in the corresponding radar ranging method provided above.

In the embodiments provided by the present application, the disclosed devices and methods can be implemented in other ways. For example, the described device embodiments are merely illustrative. For example, the division of modules or units is only a logical function division. There can be other division methods in actual implementation. For example, multiple units or components can be combined or integrated into another device, or some features can be ignored or not executed. Another point, the coupling or direct coupling or communication connection between each other shown or discussed can be indirect coupling or communication connection through some interfaces, devices, or units, and can be electrical, mechanical, or other forms.

**Claims**

1. A radar ranging method, comprising:

   obtaining a plurality of measurement data sets, by sampling at least an echo signal based on a plurality of thresholds in a measurement period, wherein the echo signal is sampled based on one threshold to obtain one measurement data set, and each measurement data set comprises at least one measurement data;
   determining M backup data and N auxiliary data in a plurality of the measurement data sets, and obtaining a total composite degree of each backup data, wherein M and N are positive integers, and a sum of M and N is equal to a total quantity of measurement data in the plurality of measurement data sets;
   determining target data from the M backup data, based on the total composite degree; and
   determining a measurement distance based on the target data.

2. The radar ranging method according to claim 1, further comprising:

   dividing a ranging range of the radar into X sub-distance ranges according to a preset rule, wherein X is a positive integer greater than 1; and
   wherein the determining M backup data and N auxiliary data in the plurality of the measurement data sets comprises:
   determining the M backup data and the N auxiliary data in the plurality of the measurement data sets, based on measurement data sampled according to a preset threshold corresponding to the sub-distance range.

3. The radar ranging method according to claim 2, wherein when emitting an outgoing signal in the measurement period, the determining the M backup data and the N auxiliary data in the plurality of the measurement data sets comprises:

   using the measurement data sampled based on the preset threshold corresponding to each of the sub-distance ranges as the backup data, to obtain the M backup data; and
   using the measurement data other than the M backup data in the plurality of the measurement data sets as the auxiliary data, to obtain the N auxiliary data.

4. The radar ranging method according to claim 2, wherein when emitting a plurality of outgoing signals in the measurement period, and powers of the plurality of outgoing signals are different, the determining the M backup data and the N auxiliary data in the plurality of the measurement data sets comprises:

   using the measurement data corresponding to the outgoing signal with a preset power in the plurality of the measurement data sets as the backup data, to obtain the M backup data; and using the measurement data other than the M backup data in the plurality of the measurement data sets as the auxiliary data, to obtain the N auxiliary data.

5. The radar ranging method according to claim 2, wherein the obtaining the total composite degree of each backup data comprises:

   determining a sub-distance range where each measurement data in the plurality of the measurement data sets is located, to obtain a sub-distance range corresponding to the backup data and the auxiliary data; and
   determining a main composite degree, an auxiliary composite degree, and a cross composite degree of backup data Si based on the backup data, the auxiliary data, and the sub-distance range corresponding to the backup data, wherein the backup data Si is any one of the M backup data,
   wherein $1 \leq i \leq M$, and i is an integer; and
   performing a weighted calculation on the main composite degree, the auxiliary composite degree, and the cross composite degree of the backup data Si, to obtain the total composite degree of the backup data Si.

6. The radar ranging method according to claim 5, wherein the determining the main composite degree of the backup data Si comprises:

   obtaining at least one backup data that meets a preset requirement in a plurality of adjacent measurement periods as a comparison data set, wherein the preset requirement is that the outgoing signal corresponding to the backup data in the comparison data set and the outgoing signal corresponding to the backup data Si in a current measurement period have a same emission power, and a threshold corresponding to the backup data in the comparison data set and a threshold corresponding to the backup data Si in the current measurement period are the same; and
   comparing the backup data Si in the current measurement period with each backup data in the comparison data set in turn; and
   obtaining the main composite degree of the backup data Si based on a comparison result.

7. The radar ranging method according to claim 6, wherein the obtaining the main composite degree of the backup data Si based on the comparison result comprises:

   when a difference between the backup data in the comparison data set and the backup data Si in the current measurement period is less than a first preset value, adding one to the main composite degree of the backup data Si; and iterating through each backup data in the comparison data set to obtain the main composite degree of the backup data Si; or
when the main composite degree of the backup data Si is greater than or equal to a main composite degree threshold, setting the main composite degree of the backup data Si as the main composite degree threshold.

8. The radar ranging method according to claim 5, wherein the determining the auxiliary composite degree of the backup data Si comprises:

   comparing the backup data Si with the N auxiliary data in turn; and
   obtaining the auxiliary composite degree of the backup data Si based on a comparison result.

9. The radar ranging method according to claim 8, wherein the obtaining the auxiliary composite degree of the backup data Si based on the comparison result comprises:

   when a difference between one of the N auxiliary data and the backup data Si is less than a second preset value, adding one to the auxiliary composite degree of the backup data; and
   iterating through each of the N auxiliary data to obtain the auxiliary composite degree of the backup data Si; or
   when the auxiliary composite degree of the backup data Si is greater than or equal to an auxiliary composite degree threshold, setting the auxiliary composite degree of the backup data Si as the auxiliary composite degree threshold.

10. The radar ranging method according to claim 5, wherein the determining the cross composite degree of the backup data Si comprises:

    determining that the backup data Si is located in a middle sub-distance range; obtaining at least one sub-distance range other than the middle sub-distance range as a target sub-distance range in the K sub-distance ranges, wherein $K \leq X$, and K is a positive integer; and
    comparing the backup data Si with the backup data in at least one of the target sub-distance range in turn; and
    determining the cross composite degree of the backup data Si based on a comparison result.

11. The radar ranging method according to claim 10, wherein the determining the cross composite degree of the backup data Si based on the comparison result comprises:

when a difference between the backup data in at least one of the target sub-distance range and the backup data Si is less than a third preset value, adding one to the cross composite degree of the backup data Si; and

iterating through the backup data in at least one of the target sub-distance range to obtain the cross composite degree of the backup data Si; or

when the cross composite degree of the backup data Si is greater than or equal to a cross composite degree threshold, setting the cross composite degree of the backup data Si as the cross composite degree threshold.

12. The radar ranging method according to claim 1, wherein the determining the target data from the M backup data based on the total composite degree comprises:
determining the backup data with a highest total composite degree from the M backup data as the target data.

13. The radar ranging method according to claim 12, wherein the determining the target data from the backup data with the highest total composite degree from the M backup data comprises:

when the backup data with the highest total composite degree from the M backup data is single,
determining the backup data with the highest total composite degree as the target data; or
when the backup data with the highest total composite degree from the M backup data is multiple, determining the backup data with the highest total composite degree and a largest distance value as the target data.

14. The radar ranging method according to claim 2, wherein the determining the measurement distance based on the target data comprises:

obtaining an endpoint value of the sub-distance range, and constructing a smoothing range with the endpoint value as a center;
determining whether the target data is located in the smoothing range; and
determining the measurement distance based on a determination result.

15. A radar ranging device, comprising:

a data obtaining module, configured to obtain a plurality of measurement data sets, by sampling at least an echo signal based on a plurality of thresholds in a measurement period, wherein the echo signal is sampled based on one threshold to obtain one measurement data set, and each measurement data set comprises at least one measurement data;

a composite degree calculation module, configured to determine M backup data and N auxiliary data in the plurality of measurement data sets, and obtain a total composite degree of each backup data, wherein M and N are positive integers, and a sum of M and N is equal to a total quantity of measurement data in the plurality of measurement data sets;

a data selecting module, configured to determine target data from the M backup data based on the total composite degree; and

a distance calculation module, configured to determine a measurement distance based on the target data.

Obtaining a plurality of measurement data sets, by sampling at least one echo signal based on a plurality of thresholds in a measurement period

S110

Determining M backup data and N auxiliary data in the plurality of measurement data sets, and obtaining a total composite degree of each backup data

S120

Determining target data from the M backup data, based on the total composite degree.

S130

Determining the measurement distance based on the target data

S140

Fig.1

controllable power transmission device

transmission driver

light emitter

Laser

transceiver timing controller

Fig.2

Fig.3

Fig.4

Fig.5

Fig.6

Fig.7

Fig.8

Fig.9

Fig.10

Fig.11

radar ranging device 1200

Data obtaining module 1210

Composite degree calculation module 1220

Data selecting module 1230

Distance calculation module 1240

Fig.12

electronic device

1301

Memory

13011

executable program code

1302

processor

Fig.13